# EUROPÄISCHE PATENTSCHRIFT

(11) **EP 2 524 444 B1**
(45) Veröffentlichungstag und Bekanntmachung des Hinweises auf die Patenterteilung: **01.04.2015**
(21) Anmeldenummer: 11701352.4
(22) Anmeldetag: 10.01.2011
(51) Int. Cl.: H04B 3/54, H04B 3/56, H04L 27/26

(54) **Verfahren zur Daten- und Energieübertragung auf der selben Leitung und entsprechendes Datenübertragungssystem**
Method for transmission of data and energy on the same line and corresponding transmission system
Procédé de transmission de données et de l'énergie sur la même ligne et système de transmission correspondant

(30) Priorität: 15.01.2010 DE 102010004829
(43) Veröffentlichungstag der Anmeldung: 21.11.2012
(73) Patentinhaber: Sew-Eurodrive GmbH & Co. KG, 76646 Bruchsal (DE)
(72) Erfinder: HUA, Zhidong, 76131 Karlsruhe (DE)
(74) Vertreter: Tüngler, Eberhard
(86) Internationale Anmeldenummer: PCT/EP2011/000053
(87) Internationale Veröffentlichungsnummer: WO 2011/085952

(56) Entgegenhaltungen:
- WO-A1-2009/106109
- DE-B3- 10 349 242
- US-A1- 2005 169 392

## Beschreibung

Die Erfindung betrifft ein Verfahren zur Datenübertragung und ein Datenübertragungssystem.

Verfahren zur Datenübertragung mittels orthogonalem Frequenzmultiplexen sind allgemein bekannt.

Aus der EP 2 048 845 A2 sind Techniken, um den Amplituden Dämpfungseffekt in OFDM-Signalen zu korrigieren, bekannt.

Die EP 2 071 757 A1 betrifft eine Vorrichtung und ein Verfahren um OFDM-Symbole zu versenden und zu empfangen.

Die DE 101 63 342 A1 betrifft ein serielles Bussystem in weichem an die angeschlossenen passiven Busteilnehmer Daten in Form von Telegrammen, die Prozessabbilder darstellen, übertragen werden.

Die DE 103 49 242 B3 betrifft eine Vorrichtung und ein Verfahren zur berührungslosen Übertragung elektrischer Leistung und Information.

Der Erfindung liegt daher die Aufgabe zugrunde, ein Verfahren zur Datenübertragung und ein Datenübertragungssystem sicherer zu machen.

Erfindungsgemäß wird die Aufgabe bei dem Verfahren nach den in Anspruch 1 angegebenen Merkmalen und bei dem Datenübertragungssystem nach Anspruch 4 gelöst.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: erstes Modem
- 2: zweites Modem
- 3: Leitung
- 5: Datenübertragungssystem
- 10: Sender
- 12: Empfänger
- 15: ID-OFDM-Symbol
- 16: Befehls-OFDM-Symbol
- 18: CRC-OFDM-Symbol
- 20: weiterer Sender
- 22: weiterer Empfänger
- 30: erster Sendepuffer
- 31: erster Stromtreiber
- 32: weitere Auswerteeinrichtung
- 34: erster Empfangspuffer
- 36: erster Bandpassfilter
- 38: erster Empfangsverstärker
- 40: erste Kopplungseinrichtung
- 41: weitere erste Kopplungseinrichtung
- 50: zweiter Sendepuffer
- 51: zweiter Stromtreiber
- 52: Auswerteeinrichtung
- 54: zweiter Empfangspuffer
- 56: zweiter Bandfilter
- 58: zweiter Empfangsverstärker
- 60: zweite Kopplungseinrichtung
- 61: weitere zweite Kopplungseinrichtung

Die Erfindung wird nun anhand von Ausführungsbeispielen mit Bezugnahme auf die Zeichnung näher erläutert. Es zeigen rein schematisch:
- Fig. 1:: eine schematische Darstellung eines Datenübertragungssystems
- Fig. 2:: den prinzipiellen Aufbau eines Telegramms

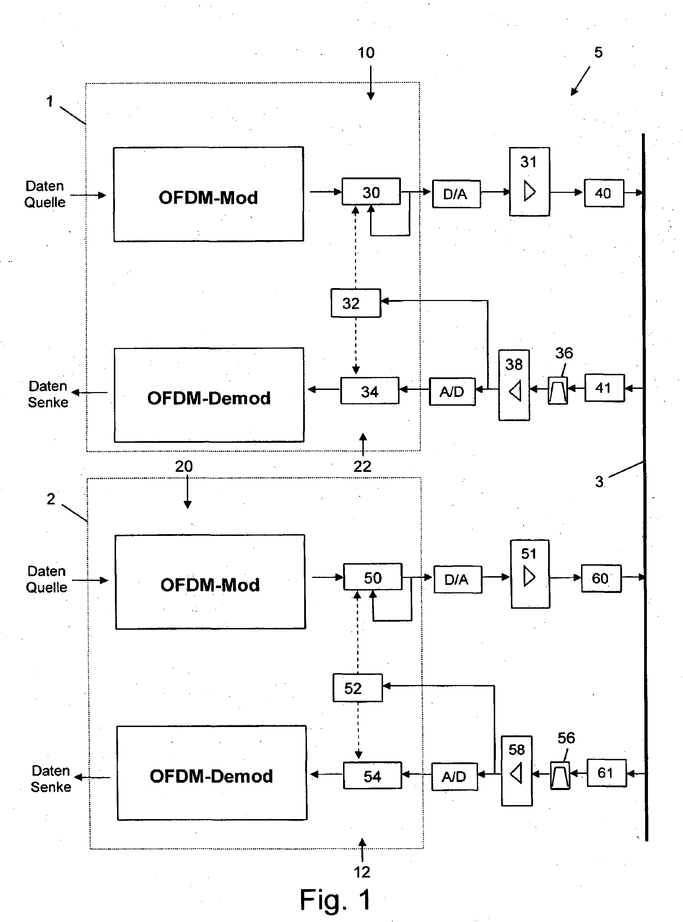

Figur 1 zeigt eine Datenübertragungssystem 5 welches Daten mittels eines Telegramms 14 über eine Leitung 3 zwischen einem ersten Modem 1 und einem zweiten Modem 2 über eine Leitung 3 austauscht. Das Datenübertragungssystem 5 erlaubt ein Verfahren zur Datenübertragung vorzugsweise mittels orthogonalem Frequenzmultiplexen (OFDM).

Das erste Modem 1 weist einen Sender 10 und einen weiteren Empfänger 22 auf, welche zur Erzeugung und Verarbeitung von OFDM Symbolen aufgebaut sind. Der Sender 10 wandelt dazu die Daten einer Datenquelle mittels eines OFDM Modulators in OFDM-Symbole um, welche in einem Telegramm angeordnet sind.

Ein Telegramm entspricht dabei einem Datenblock, welcher einem Befehl zum Beispiel zur Steuerung einer Automatisierungskomponente entspricht. Zum Beispiel bewirkt der Datenblock das Starten oder Anhalten oder enthält einen Parametersatz zur Parametrierung einer dafür vorgesehen Automatisierungskomponente, wie zum Beispiel einem Motor, Umrichter etc..

Die OFDM-Symbole 15, 16, 17 werden über einen ersten Sendepuffer 30, einen Digital-Analog-Wandler D/A und einen ersten Stromtreiber 31 an eine erste Kopplungseinrichtung 40 geleitet. Die erste Kopplungseinrichtung 41 koppelt das Datensignal, welches den OFDM-Symbolen 15, 16, 17 bzw. dem Telegramm 44 entspricht vorzugsweise berührungslos auf die Leitung 3.

Das Datensignal kann nun von einem zweiten Modem 2 empfangen werden. Dazu weist das zweite Modem 2 einen Empfänger 12 auf. Der Empfänger 12 umfasst eine weitere zweite Kopplungseinrichtung 61 zur, vorzugsweise berührungslosen, Auskopplung des Datensignals aus der Leitung 3. Das Datensignal wird dann von einem zweiten Bandpassfilter 56 gefiltert und an einen Analog-Digital-Wandler A/D weitergeleitet.

Dann wird das so aufbereitet Datensignal über einen zweiten Empfangspuffer 54 an einen OFDM-Demodulator weitergeleitet. welcher die aus dem Datensignal gewonnenen Daten an eine Datensenke bzw. die entsprechend ausgeführte Automatisierungskomponente weiter gibt. Die Automatisierungskomponente führt den entsprechenden Befehl aus.

Für die bidirektionale Kommunikation zwischen dem ersten und zweiten Modem 1, 2 weist das zweite Modem 2 entsprechend einen OFDM-Modulator, einen zweiten Sendpuffer 50, einen Digital-Analog-Wandler D/A, einen zweiten Stromtreiber 51 und eine zweite Kopplungseinrichtung 60 auf. Zum Empfangen von Signalen weist das erste Modem eine weitere erste Kopplungseinrichtung 41, ein erstes Bandpassfilter 36, einen ersten Empfangsverstärker 38, einen Analog-Digital-Wandler A/D und einen ersten Empfangspuffer 34 auf. Das Datensignal wird in einem OFDM-Demodulator entsprechend wie im zweiten Modem 2 demoduliert und die daraus gewonnenen Daten an eine Datensenke weitergeleitet.

In einer bevorzugten Ausführungsform benutzen der Sender 10 und der weitere Empfänger 22 des ersten Modems 1 beziehungsweise der weitere Sender 20 und der Empfänger 12 des zweiten Modems 2 jeweils eine gemeinsame Kopplungseinrichtung.

In einer weiteren bevorzugten Ausführungsform weisen die entsprechend verwendeten Kopplungseinrichtungen entsprechend ausgeführte Spulen und/oder Kondensatoren auf, um an die Leitung 3 induktiv und/oder kapazitiv zu koppeln.

Erfindungsgemäß werden die OFDM-Symbole im ersten Sendepuffer 30, zum Beispiel mittels eines FIFO-Elementes (First in - First-out), n-fach wiederholt. Der Sender 10 erzeugt so ein Telegramm wo jedes OFDM-Symbol n-fach wiederholt gesendet wird. n ist vorzugsweise eine ganze Zahl zwischen 1 und 5.

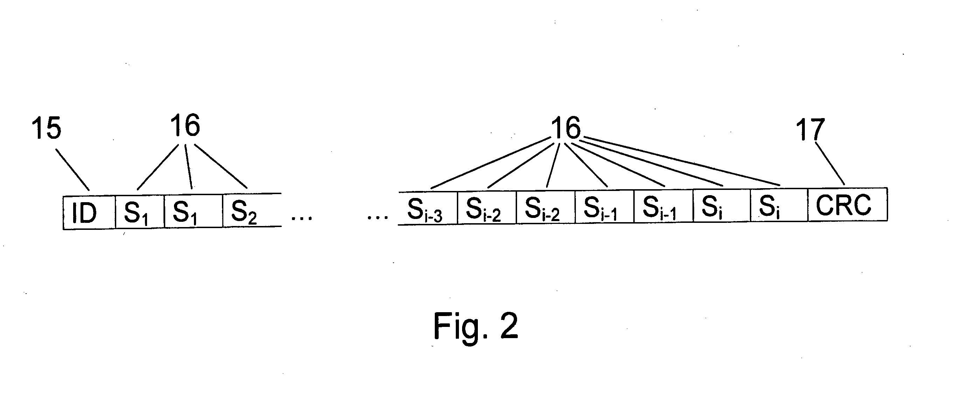

Die Figur 2 zeigt schematisch ein Telegramm mit einem ID- OFDM-Symbol 15, zur Identifikation des Telegramms beziehungsweise des Empfängers, verschiedenen Befehls-OFDM Symbolen S₁, S₂, ... S₁, 16 zur eigentlichen Datenübertragung und einem CRC-OFDM-Symbol 17 als Kontroll-Symbol.

Im in Figur 2 gezeigten Ausführungsbeispiel kommt das ID-OFDM-Symbol 15 und das CRC-OFDM-Symbol 17 nur einmal im Telegramm vor. In weiteren Ausführungsbeispielen werden auch diese OFDM-Symbole 15, 17 wiederholt gesendet.

Das Telegramm mit den n-fach wiederholten Befehls-OFDM-Symbolen 16 wird vom Empfänger 12 des zweiten Modems 2 mittels der weiteren zweiten Kopplungseinrichtung 61 empfangen. Der zweite Empfangspuffer 54 addiert die durch das zweite Bandfilter 56, den zweiten Empfangsverstärker 58 und den Analog-Digitalwandler A/D aufbereiteten n-fach wiederholten Befehls-OFDM-Symbole 16 symbolweise in Phase.

Das bedeutet konkret für das in Figur 2 gezeigte Telegramm, dass die OFDM-Symbole mit dem gleichen Index "1, 2, ..., i-3, i-2, i-1, i" in Phase addiert werden. So werden zum Beispiel die zwei Befehls-OFDM-Symbolen 16 S₁ zu einem einzigen Befehls-OFDM-Symbol S₁ zusammengefasst.

Die zusammengefassten i OFDM-Symbole werden dann vom OFDM-Demodulator OFDM-Demod demoduliert und der Datensenke als Datenstrom beziehungsweise Befehl zugeführt. Dies führt zu einem verbesserten Signal zu Rausch Verhältnis, was bei starken Störungen insbesondere bei einer Powerline-Übertragung im Industriellen Umfeld zu einer fehlerresistenten, in manchen Fällen erst benutzbaren Datenübertragung führt.

In einer weiteren bevorzugten Ausführungsform weist das zweite Modem eine Auswerteeinrichtung 52 auf. Der Auswerteeinrichtung 52 wird das empfangene Datensignal, insbesondere ein Testsignal, des Senders 10 nach dem zweiten Empfangsverstärker 58 zugeführt, wie in Figur 1 schematisch dargestellt.

Vorzugsweise wird das Testsignal bei einer Initialisierung des Verfahrens zur Datenübertragung gesendet. Die Auswerteeinrichtung 52 im Empfänger 12 bestimmt eine Signalstärke, insbesondere eine Amplitude oder Energie, des Testsignals. In einer ersten alternativen Ausführungsform bestimmt die Auswerteeinrichtung 52 aus der Signalstärke die Wiederholrate der OFDM-Symbole.

Zum Beispiel werden die OFDM-Symbol bei einer empfangenen Signalstärke im Vergleich zu einer in der Auswerteeinrichtung gespeicherten Referenzsignalstärke von 0 dB einmal gesendet, von bis zu -10 dB zweimal gesendet von bis zu - 20 dB dreimal gesendet und von -30dB viermal gesendet. Die Auswerteeinrichtung 52 übermittelt die Wiederholrate, das heißt, wie oft die OFDM-Symbole gesendet werden müssen an den zweiten Sendepuffer 50 und den zweiten Empfangspuffer 54. Somit können der zweite Sendepuffer 50 und der zweite Empfangspuffer 54 die OFDM-Symbole entsprechend vervielfältigen beziehungsweise empfangen.

Zusätzlich übermittelt das zweite Modem 2 dem ersten Modem 1 die Wiederholrate, damit der Sender 10 und der weitere Empfänger 22 entsprechend die OFDM-Symbole verarbeiten.

In einer zweiten alternativen Ausführungsform übermittelt der Empfänger 12 die Signalstärke an den Sender 10 und eine weitere Auswerteeinrichtung 32 im Sender 10. Die weitere Auswerteeinrichtung 32 bestimmt aus der Signalstärke die Wiederholrate der OFDM-Symbole. Danach übermittelt die weitere Auswerteeinrichtung 32 dem ersten Sendepuffer 30 und dem ersten Empfangspuffer 34 die notwendige, anzuwendende Wiederholrate. Diese wird anschließend vom Sender 10 des ersten Modems 1 ebenso dem zweiten Modems 2 mitgeteilt, so dass auch dort der zweite Sendepuffer 50 und der zweite Empfangspuffer 54 die OFDM-Symbole entsprechend vervielfachen oder empfangen können.

Die Signalstärke des Testsignals ist vor allem von Übertragungseigenschaft eines Übertragungsmediums, zum Beispiel der Leitung 3, abhängig. Somit wird die Wiederholrate in Abhängigkeit der Übertragungseigenschaft des Übertragungsmediums ermittelt.

Vorzugsweise ist das Testsignal ein Signal mit Zirpe (Chirp). Zum Beispiel enthält die mathematische Beschreibung des Testsignals den Term sin (ω t + φ(t)). Dabei bedeutet φ(t), dass die Phase zeitabhängig ist. Ein Signal mit Zirpe, oder allgemein mit dem Englischen Begriff Chirp bezeichnet, verändert seine Frequenz im Laufe der Zeit. Dies hat beim Testsignal den Vorteil, dass ein breiter Frequenzbereich der Übertragungseigenschaften des Übertragungsmediums mit einem einzigen Testsignal erfasst wird. Das Testsignal ist bevorzugterweise ein zeitlich begrenzter Spannungspuls und/oder Strompuls, welcher insbesondere bis zu 200 Mikrosekunden lang ist.

Ein OFDM-Symbol ist im Frequenzbereich aus mehreren Unterträgern zusammengesetzt welche orthogonal zueinander sind. Die Unterträger bilden Untersymbole aus denen sich das OFDM-Symbol zusammensetzt.

Der Vorteil des Chirp-Signals als Testsignal liegt darin, dass mit einem Testsignal die Übertragungseigenschaften des Übertragungsmediums in einem größeren Frequenzbereich bestimmt werden. Wird das Testsignal frequenzselektiv ausgewertet, zum Beispiel in dem die Signalstärke frequenzabhängig bestimmt wird, so kann auch die Wiederholrate frequenzselektiv für jeden Unterträger separat bestimmt und optimiert werden.

Bei einer Vorrichtung mit einem Datenübertragungssystem 5 ist die Leitung 3 vorzugsweise als eine langgestreckt verlegte, geschlossene Leiterschleife ausgeführt. Entlang dieser Leiterschleife sind bewegbare Verbraucher, insbesondere bewegbar angeordnete Elektromotoren, angeordnet. Die Verbraucher weisen jeweils ein Modem auf, welches entsprechend dem ersten Modem 1 ausgeführt ist.

Das Modem koppelt einen Wechselstromanteil in einem Frequenzbereich auf die Leiterschleife. Der Frequenzbereich liegt vorzugsweise im MHz -Bereich, insbesondere zwischen 0.5 MHz bis 8 MHz. Die Amplitude des Wechselstromanteils, oder mit anderen Worten die Datensignalamplitude in der Stromleitung beträgt bis zu 10 Milliampere.

Der Wechselstromanteil dient zur Datenübertragung. Ein weiterer Wechselstromanteil mit einer Frequenz ist zur Energieübertragung in die Leiterschleife eingeprägt. Dazu ist vorzugsweise ein Wechselrichter an die Leiterschleife angeschlossen. Die Frequenz liegt vorzugsweise im Bereich von 10 kHz bis einigen hundert kHz besonders bevorzugt zwischen 20 kHz und 200 kHz. Die Amplitude des weiteren Wechselstromanteils liegt im Bereich zwischen einigen Ampere bis einigen hundert Ampere vorzugsweise zwischen 50 Ampere und 100 Ampere.

Durch den Wechselrichter werden Impulsartige periodische Störungen auf die Leiterschliefe aufgeprägt. Diese sind durch die Schaltelement im Wechselrichter bestimmt. Die Impulsstörungen sind insbesondere paarweise angeordnet, wobei zwischen den Paaren ein fester Zeitabstand besteht und der Zeitabstand zwischen den Impulsstörungen des Paares schwankt. Der feste Zeitabstand entspricht der Frequenz.

Bei gleichzeitiger Nutzung des Verfahrens zur Datenübertragung und Energieübertragung über dieselbe Leitung entspricht die zeitliche Länge eines OFDM-Symbols einer Halbperiode der Frequenz. So können bei der Addition der wiederholt gesendeten OFDM-Symbole die starken Impulsstörungen einfach eliminiert werden. Da der Zeitabstand innerhalb eines Paares Schwankt, liegen die Impulsstörungen in unterschiedlichen Zeitabschnitten des wiederholten OFDM-Symbols.

Somit wird der weitere Wechselstromanteil in dieselbe Leitung 3 eingeprägt und das Datensignal wird berührungslose in dieselbe Leitung 3 eingeprägt und ausgekoppelt.

Die Verbraucher weisen jeweils eine Sekundärwicklung auf, aus der der jeweilige Verbraucher mit Energie versorgt ist. Die Sekundärwicklung koppelt induktiv an die Leiterschleife. Eine Kapazität ist derartig in Reihe und/oder parallel zur Sekundärwicklung geschaltet, so dass eine Resonanzfrequenz der Schaltung aus Sekundärwicklung und Kapazität eine Resonanzfrequenz aufweist, welche der Frequenz entspricht.

Jeder Verbraucher und/oder die Steuerung weisen jeweils ein Modem entsprechend dem ersten Modem 1 auf. Somit bilden die entsprechenden Komponenten der Verbraucher und/oder der Steuerung eine besonders bevorzugte Ausführungsform des Datenübertragungssystems.

Das Datenübertragungssystem verwendet das Verfahren zur Datenübertragung mittels orthogonalem Frequenzmultiplexen (OFDM) zwischen dem Sender 10 und dem Empfänger 12 mit einem Datensignal. Das Datensignal weist das Telegramm 44 auf, welches aus OFDM-Symbolen aufgebaut ist.

Die OFDM-Symbole werden symbolweise mit einer Wiederholrate n-fach hintereinander innerhalb des Telegramms 44 vom Sender 10 gesendet. Beim Empfangen im Empfänger 12 werden die jeweils n-fach hintereinander gesendeten OFDM-Symbole symbolweise in Phase addiert werden.

Bei einer weiteren bevorzugten nicht in der Zeichnung dargestellten Ausführungsform detektiert ein Störungsdetektor im Empfänger 12 und/oder im Sender 10 eine zeitliche Impulsstörung auf dem Übertragungsmedium. Der Störungsdetektor ist zum Beispiel als Spitzenspannungsdetektor ausgeführt und löst einen Zählimpuls aus, wenn die Spannung auf der Leitung 3 eine vorgegebene Spannung überschreitet.

Die Wiederholrate der OFDM-Symbole wird nun bei dieser weiteren bevorzugten nicht in der Zeichnung dargestellten Ausführungsform des Verfahrens entweder in Abhängigkeit der Häufigkeit der zeitlichen Impulsstörung festgelegt, oder die Wiederholrate der OFDM-Symbole wird in Abhängigkeit der Signalstärke und der Häufigkeit der zeitlichen Impulsstörungen bestimmt.

Die OFDM-Symbole werden auch bei diesem Verfahren symbolweise mit einer Wiederholrate n-fach hintereinander innerhalb des Telegramms 44 gesendet, und beim Empfangen die mehrfach hintereinander gesendeten OFDM-Symbole symbolweise in Phase addiert.

Bei einer Änderung der Übertragungsstrecke auf Grund einer Bewegung des Senders 10 und/oder des Empfängers 12 für das Datensignal ist das Datenübertragungssystem so ausgelegt, dass der Sender 10 die Änderung erkennt und eine Initialisierung durchgeführt wird.

Zum Erkennen der Änderung können zum Beispiel Sensoren an der Wegstrecke des Senders 10 und/oder Empfängers 12 vorgesehen sein.

In anderen Fällen ändert sich zum Beispiel die Übertragungstrecke durch das Schalten einer Wegweiche. Diese Änderung der Übertragungsstrecke lässt sich erfassen, indem entsprechende Signallaufzeiten gemessen werden oder Signale von Sensoren an der Weiche an den Sender übermittelt werden oder direkt ein Signal bezüglich des Schaltvorgangs durch die Weichensteuerung an den Sender übermittelt wird.

Das erneute Senden eines Testsignals lässt sich natürlich auch bei unterschreiten eines Signalstärke des Datensignals auslösen.

Die beschriebenen Verfahren sind natürlich bei jeder beliebigen Vorrichtung mit Sendern und Empfängern einsetzbar. Insbesondere dann wenn die Sender und/oder die Empfänger relativ zu einer Leitung 3 bewegbar sind und untereinander und mit einer Steuerung über die Leitung 3 mittels des Verfahrens kommunizieren.

Eine bevorzugte Anwendungsmöglichkeit für die Vorrichtung ist eine Einschienenhängebahn Die Verbraucher sind dabei als Umlaufkatzen ausgeführt, welche jeweils einen Motor und ein Modem umfassen.

## Patentansprüche

1. Verfahren zur Datenübertragung durch ein OFDM-Verfahren zwischen einem Sender (10) und einem Empfänger (12) und zur elektrischen Energieübertragung.
wobei die Datenübertragung mit einem Wechselstromanteil und die Energieübertragung mit einem weiteren Wechselstromanteil zumindest teilweise dieselbe Leitung (3) nutzt,
wobei zur Datenübertragung ein Datensignal aus OFDM-Symbolen aufgebaut ist,
und der weitere Wechselstromanteil eine Frequenz aufweist,
**dadurch gekennzeichnet, dass**
die zeitliche Länge eines OFDM-Symbols einer Halbperiode der Frequenz entspricht.

2. Verfahren nach Anspruch 1,
**dadurch gekennzeichnet, dass**
die OFDM-Symbole symbolweise mit einer Wiederholrate n-fach hintereinander gesendet werden,
und beim Empfangen die mehrfach hintereinander gesendeten OFDM-Symbole symbolweise in Phase addiert werden.

3. Verfahren nach Anspruch 2, **dadurch gekennzeichnet, dass** der weitere Wechselstromanteil in dieselbe Leitung (3) eingeprägt wird und das Datensignal berührungslose in dieselbe Leitung (3) eingeprägt und ausgekoppelt wird.

4. **Vorrichtung mit** Datenübertragungssystem (5),
**dadurch gekennzeichnet, dass**
das Datenübertragungssystem (5) Mittel zum Ausführen der Schritte **eines Verfahrens nach einem der Ansprüche 1** bis 3 umfasst.

5. **Vorrichtung nach Anspruch** 4, **dadurch gekennzeichnet, dass**
der Sender (10, 20) und/oder der Empfänger (12, 22) relativ zu einer Leitung (3) bewegt werden und geeignet sind, untereinander und mit einer Steuerung über die Leitung (3) mittels des Datenübertragungssystems zu kommunizieren.

6. Vorrichtung **nach Anspruch 4 oder 5** mit entlang einer langgestreckt verlegten geschlossenen Leiterschleife bewegbaren Verbrauchern,
wobei ein Wechselstromanteil in einem Frequenzbereich auf der Leiterschleife zur Datenübertragung dient,
wobei ein weiterer Wechselstromanteil mit einer Frequenz zur Energieübertragung in die Leiterschliefe eingeprägt ist,
wobei die Verbraucher jeweils eine Sekundärwicklung aufweisen, aus der der jeweilige Verbraucher mit Energie versorgt ist, wobei die Sekundärwicklung induktiv an die Leiterschliefe koppelt und eine Kapazität derartig in Reihe und/oder parallel zur Sekundärwicklung geschaltet ist, so dass eine Resonanzfrequenz der Schaltung aus Sekundärwicklung und Kapazität eine Resonanzfrequenz aufweist, welche der Frequenz entspricht
**dadurch gekennzeichnet, dass**
die Verbraucher jeweils und/oder die Steuerung den **Sender oder den Empfänger des Datenübertragungssystems**
**bilden.**

7. Vorrichtung nach Anspruch 6,
**dadurch gekennzeichnet, dass**
die Vorrichtung eine Einschienenhängebahn ist und die Verbraucher jeweils ein Motor einer Umlaufkatze umfassen.

## Claims

1. Method for data transmission by an OFDM method between a transmitter (10) and a receiver (12) and for electrical energy transmission,
wherein the data transmission by an alternating current component and the energy transmission by a further alternating current component use at least partially the same line (3),
wherein for data transmission a data signal is made up of OFDM symbols and the further alternating current component has a frequency,
**characterised in that**
the length in time of an OFDM symbol corresponds to a half-period of the frequency.

2. Method according to Claim 1,
**characterised in that**
the OFDM symbols are transmitted symbol-wise at a repetition rate n-times in succession,
and on reception, the OFDM symbols transmitted a plurality of times in succession are added symbol-wise in phase.

3. Method according to Claim 2,
**characterised in that**
the further alternating current component is impressed into the same line (3) and the data signal is contactlessly impressed into and coupled out of the same line.

4. Device having a data transmission system (5), **characterised in that**
the data transmission system (5) comprises means for carrying out the steps of a method according to one of Claims 1 to 3.

5. Device according to Claim 4,
**characterised in that**
the transmitter (10, 20) and/or the receiver (12, 22) are moved relative to a line (3) and are adapted to communicate among one another and with a control via the line (3) by means of the data transmission system.

6. Device according to Claim 4 or 5 having consumers movable along an elongately laid, closed conductor loop,
wherein an alternating current component in a frequency range on the conductor loop is used for data transmission,
wherein a further alternating current component is impressed into the conductor loop at a frequency for energy transmission,
wherein the consumers each have a secondary winding, from which the respective consumer is supplied with energy, wherein the secondary winding is inductively coupled to the conductor loop and a capacitance is connected in series and/or in parallel to the secondary winding such that a resonant frequency of the circuit comprising secondary winding and capacitance has a resonant frequency corresponding to the frequency,
**characterised in that**
each of the consumers and/or the control form the transmitter or the receiver of the data transmission system.

7. Device according to Claim 6,
**characterised in that**
the device is a monorail conveyor and the consumers each comprise a motor of a circulating carriage.

## Revendications

1. Procédé de transmission de données par un procédé OFDM entre un émetteur (10) et un récepteur (12) ainsi que de transmission d'énergie électrique,
selon lequel la transmission de données avec une composante de courant alternatif et la transmission d'énergie avec une autre composante de courant alternatif utilisent au moins partiellement la même ligne (3),
selon lequel un signal de données composé de symboles OFDM est construit pour la transmission de données et l'autre composante de courant alternatif présente une certaine fréquence,
**caractérisé en ce que**
la longueur temporelle d'un symbole OFDM correspond à une demi-période de ladite fréquence.

2. Procédé selon la revendication 1,
**caractérisé en ce que**
les symboles OFDM sont envoyés les uns après les autres, symbole par symbole, avec un taux de répétition n,
et lors de leur réception, les symboles OFDM envoyés plusieurs fois les uns après les autres sont additionnés en phase symbole par symbole.

3. Procédé selon la revendication 2,
**caractérisé en ce que**
l'autre composante de courant alternatif est injectée dans la même ligne (3) et le signal de données est injecté et extrait sans contact dans/de la même ligne (3).

4. Dispositif avec un système de transmission de données (5),
**caractérisé en ce que**
le système de transmission de données (5) comprend des moyens pour exécuter les étapes d'un procédé selon l'une des revendications 1 à 3.

5. Dispositif selon la revendication 4,
**caractérisé en ce que**
l'émetteur (10, 20) et/ou le récepteur (12, 22) sont déplacés par rapport à une ligne (3) et sont aptes à communiquer entre eux et avec une commande via la ligne (3) au moyen du système de transmission de données.

6. Dispositif selon la revendication 4 ou 5 avec des consommateurs pouvant se déplacer le long d'une boucle conductrice fermée s'étendant en longueur,
dans lequel une composante de courant alternatif dans une certaine plage de fréquences sur la boucle conductrice sert à la transmission de données,
dans lequel une autre composante de courant alternatif d'une certaine fréquence est injectée dans la boucle conductrice pour la transmission d'énergie,
les consommateurs présentant chacun un enroulement secondaire, à partir duquel le consommateur est alimenté en énergie, l'enroulement secondaire étant couplé par induction à la boucle conductrice et une capacité étant couplée en série et/ou en parallèle avec l'enroulement secondaire de façon qu'une fréquence de résonance du circuit composé de l'enroulement secondaire et de la capacité présente une fréquence de résonance qui correspond à ladite fréquence,
**caractérisé en ce que**
chacun des consommateurs et/ou la commande forment l'émetteur ou le récepteur du système de transmission de données.

7. Dispositif selon la revendication 6,
**caractérisé en ce que**
le dispositif est une voie suspendue monorail et les consommateurs comprennent chacun un moteur d'un chariot circulant.
